# EUROPEAN PATENT APPLICATION

(11) **EP 4 391 101 A1**
(43) Date of publication of application: **26.06.2024**
(21) Application number: 21953655.4
(22) Date of filing: 16.08.2021
(51) Int. Cl.: H01M 4/13

(54) **ELECTROCHEMICAL DEVICE AND ELECTRONIC DEVICE**

(71) Applicant: Ningde Amperex Technology Limited, Ningde, Fujian 352100 (CN)
(72) Inventor: LI, Xuecheng, Ningde, Fujian 352100 (CN)
(74) Representative: Klunker IP Patentanwälte PartG mbB
(86) International application number: PCT/CN2021/112819
(87) International publication number: WO 2023/019401

(57) **Abstract**

This application discloses an electrochemical device and an electronic device. The electrochemical device includes an electrode assembly. The electrode assembly includes a first electrode plate, a first separator, and a second electrode plate that are stacked in sequence. The first electrode plate includes a first current collector, a first active material layer, and a first insulation layer. The first active material layer is stacked on the first current collector. The first insulation layer is stacked on a first surface of the first active material layer, the first surface being oriented back from the first current collector. Along a first direction, the first electrode plate includes a first end portion and a second end portion. At least one of the first end portion or the second end portion is connected to a first tab. The first insulation layer is located at the first end portion. A width w1 of the first insulation layer satisfies: 2 mm ≤ w1 ≤ 10 mm. By disposing the first insulation layer on the first surface of the first active material layer and defining the width of the first insulation layer, this application reduces the risk of contact and short circuit between the first electrode plate and the second electrode plate caused by shrinkage of the first separator, maintains a good interface between the first electrode plate and the first separator, and meets the requirement of high electrochemical performance.

## Description

### TECHNICAL FIELD

This application relates to the technical field of energy storage, and in particular, to an electrochemical device and an electronic device.

### BACKGROUND

An electrochemical device is a device that converts external energy into electrical energy and stores the electrical energy internally so that the electrical energy can be supplied to an external electronic device (such as a portable electronic device) when necessary. Currently, electrochemical devices are widely used in electronic devices such as an unmanned aerial vehicle, a mobile phone, a tablet, and a laptop computer. Generally, an electrochemical device includes an electrode assembly. The electrode assembly includes a first electrode plate, a first separator, and a second electrode plate. The first electrode plate is of an opposite polarity to the second electrode plate. The first separator serves as a spacer between the first electrode plate and the second electrode plate. Currently, when the first separator serving as a spacer between the first electrode plate and the second electrode plate shrinks, the first electrode plate is prone to contact the second electrode plate to cause a short circuit.

### SUMMARY

An objective of the embodiments of this application is to provide an electrochemical device and an electronic device to solve a problem in the prior art, that is, the problem that the first electrode plate is prone to contact the second electrode plate to cause a short circuit when the first separator serving as a spacer between the first electrode plate and the second electrode plate shrinks.

According to an aspect of some embodiments of this application, an electrochemical device is provided. The electrochemical device includes an electrode assembly. The electrode assembly includes a first electrode plate, a first separator, and a second electrode plate that are stacked in sequence. The first electrode plate includes a first current collector, a first active material layer, and a first insulation layer. The first active material layer is stacked on one surface of the first current collector. The first insulation layer is stacked on a first surface of the first active material layer, the first surface being oriented back from the first current collector. Along a first direction, the first electrode plate includes a first end portion and a second end portion. At least one of the first end portion or the second end portion is connected to a first tab. The first insulation layer is located at the first end portion. Along the first direction, a width w1 of the first insulation layer satisfies: 2 mm ≤ w1 ≤ 10 mm.

By disposing the first insulation layer at the first end portion of the first electrode plate and defining the width of the first insulation layer to be not less than 2 mm, the first insulation layer serves as a spacer between the first electrode plate and the second electrode plate when the first separator shrinks, thereby reducing the risk of contact and short circuit between the first electrode plate and the second electrode plate. In addition, by defining the width of the first insulation layer to be not greater than 10 mm, this application reduces the impact on the interface performance of the first electrode plate caused by the placement of the first insulation layer, and therefore, reduces the impact on the lithium ion migration between the first electrode plate and the second electrode plate caused by the placement of the first insulation layer, thereby achieving superior overall performance of the electrochemical device.

In an optional implementation, the first electrode plate, the first separator, and the second electrode plate are stacked in sequence along a second direction. The first direction is perpendicular to the second direction. In some embodiments, the second direction is referred to as a thickness direction of the electrochemical device.

In an optional implementation, the first tab is connected to the first current collector, and the first tab extends beyond the first current collector along the first direction to facilitate connection between the electrochemical device and an external circuit.

In an optional implementation, the first end portion and the second end portion are two opposite end portions of the first electrode plate along a direction in which the first tab extends beyond the first current collector. In other words, the first end portion and the second end portion are two opposite end portions of the first electrode plate along the first direction.

In an optional implementation, along the first direction, an edge, away from the second end portion, of the first current collector is flush with an edge, away from the second end portion, of the first active material layer. In other words, a surface, oriented toward the first separator, of the first current collector, is fully coated with the first active material layer. In this way, the first current collector is fully utilized, thereby increasing the energy density of the electrochemical device.

In an optional implementation, for reasons such as a limitation on the processing technology for forming the first electrode plate, along the first direction, the edge, away from the second end portion, of the first current collector, exceeds the edge, away from the second end portion, of the first active material layer by an amount not greater than 1 mm.

In an optional implementation, the first surface includes a first region and a second region. The first region is located at the first end portion. The first insulation layer is stacked on the first region. A surface of the first insulation layer is flush with the second region, the surface being oriented back from the first region. Therefore, the interface of the first electrode plate toward the first separator is flat and even, thereby facilitating lithium ion migration between the first electrode plate and the second electrode plate. In an optional implementation, the width w1 of the first insulation layer satisfies: 3 mm ≤ w1 ≤ 5 mm.

In an optional implementation, the first electrode plate further includes a second insulation layer. The second insulation layer is stacked on the first surface. The second insulation layer is located at the second end portion. In an optional implementation, along the first direction, the width w2 of the second insulation layer satisfies: 2 mm ≤ w2 ≤ 10 mm.

By disposing the second insulation layer at the second end portion of the first electrode plate and defining the width of the second insulation layer to be not less than 2 mm, the second insulation layer serves as a spacer between the first electrode plate and the second electrode plate when the first separator shrinks, thereby reducing the risk of contact and short circuit between the first electrode plate and the second electrode plate. In addition, by defining the width of the second insulation layer to be not greater than 10 mm, this application reduces the impact on the interface performance of the first electrode plate caused by the placement of the second insulation layer, and therefore, reduces the impact on the lithium ion migration between the first electrode plate and the second electrode plate caused by the placement of the second insulation layer, thereby achieving superior overall performance of the electrochemical device.

In an optional implementation, the first surface further includes a third region. The third region is located at the second end portion. A surface of the second insulation layer is flush with the second region, the surface being oriented back from the third region. Therefore, the interface of the first electrode plate toward the first separator is flat and even, thereby facilitating lithium ion migration between the first electrode plate and the second electrode plate. In an optional implementation, along the first direction, the width w2 of the second insulation layer satisfies: 3 mm ≤ w2 ≤ 5 mm.

In an optional implementation, the first electrode plate further includes a second active material layer. The second active material layer is stacked on another surface of the first current collector. The first electrode plate further includes a third insulation layer. The third insulation layer is stacked on a second surface of the second active material layer, the second surface being oriented back from the first current collector. The third insulation layer is located at the first end portion. In an optional implementation, along the first direction, the width w3 of the third insulation layer satisfies: 2 mm ≤ w3 ≤ 10 mm. By disposing the third insulation layer, this application further reduces the risk of an internal short circuit of the electrode assembly.

In an optional implementation, along the first direction, the third insulation layer and the first insulation layer are disposed opposite to each other at the first end portion. In an optional implementation, along the first direction, the width w3 of the third insulation layer satisfies: 3 mm ≤ w3 ≤ 5 mm.

In an optional implementation, the first electrode plate further includes a fourth insulation layer. The fourth insulation layer is stacked on the second surface. The fourth insulation layer is located at the second end portion. In an optional implementation, along the first direction, the width w4 of the fourth insulation layer satisfies: 2 mm ≤ w4 ≤ 10 mm. By disposing the fourth insulation layer, this application further reduces the risk of an internal short circuit of the electrode assembly.

In an optional implementation, along the first direction, the fourth insulation layer and the second insulation layer are disposed opposite to each other at the second end portion. In an optional implementation, along the first direction, the width w4 of the fourth insulation layer satisfies: 3 mm ≤ w4 ≤ 5 mm.

In an optional implementation, the first electrode plate further includes a first layer. The first layer is laid between the first current collector and the first active material layer. The first layer bonds the first current collector and the first active material layer, thereby reducing the risk that the first active material layer is detached from the first current collector, and reducing the risk that the first insulation layer and the second insulation layer disposed on the first active material layer are detached together with the first active material layer from the first current collector simultaneously. Therefore, when the first separator shrinks, the first insulation layer and/or the second insulation layer serves as a spacer between the first electrode plate and the second electrode plate. In an optional implementation, the first layer includes a binder and a conductive agent.

In an optional implementation, the first electrode plate, the first separator, and the second electrode plate are wound together to form a winding structure. A winding axis of the winding structure is arranged along the first direction. An outermost coil of the first electrode plate is closer to the winding axis than an outermost coil of the second electrode plate. The first insulation layer extends from a winding tail end of the first electrode plate toward a winding start end of the first electrode plate. The first insulation layer is disposed around a side of the outermost coil of the first electrode plate, the side being oriented back from the winding axis. When the electrochemical device is damaged due to dropping to the ground or for other reasons, the outermost coil of the first separator shrinks severely at the first end portion or the second end portion. The first insulation layer is located at the first end portion. The first insulation layer extends from a winding tail end of the first electrode plate toward a winding start end of the first electrode plate. The first insulation layer is disposed around the outermost coil of the first electrode plate. Therefore, the first insulation layer serves as a spacer between the first electrode plate and the second electrode plate, thereby reducing the risk of a short circuit between the first electrode plate and the second electrode plate caused by the shrinkage of the first separator.

In an optional implementation, the first insulation layer extends from the winding tail end of the first electrode plate to the winding start end of the first electrode plate, thereby strengthening the effect of the first insulation layer in serving as a spacer between the first electrode plate and the second electrode plate.

In an optional implementation, the electrode assembly further includes a second separator, a third electrode plate, a third separator, and a fourth electrode plate that are stacked in sequence. The second separator is stacked on the first electrode plate. The second separator serves as a spacer between the first electrode plate and the third electrode plate. The numbers of the second separators, the third electrode plates, the third separators, and the fourth electrode plates are plural. The plurality of second separators, third electrode plates, third separators, and fourth electrode plates are stacked along the second direction, thereby improving the capabilities of charging and discharging the electrochemical device through an external circuit.

According to an aspect of some embodiments of this application, an electronic device is provided, including a load and the electrochemical device according to any one of the embodiments described above. The electrochemical device supplies power to the load.

Beneficial effects of some embodiments of this application include: by disposing the first insulation layer at the first end portion of the first electrode plate and defining the width of the first insulation layer to be not less than 2 mm, the first insulation layer serves as a spacer between the first electrode plate and the second electrode plate when the first separator shrinks, thereby reducing the risk of contact and short circuit between the first electrode plate and the second electrode plate. In addition, by defining the width of the first insulation layer to be not greater than 10 mm, this application reduces the impact on the interface performance of the first electrode plate caused by the placement of the first insulation layer, and therefore, reduces the impact on the lithium ion migration between the first electrode plate and the second electrode plate caused by the placement of the first insulation layer, thereby achieving superior overall performance of the electrochemical device.

### BRIEF DESCRIPTION OF DRAWINGS

One or more embodiments are described illustratively with reference to corresponding drawings. The illustrative description does not constitute any limitation on the embodiments. Components marked with the same reference numeral in the drawings represent similar components. Unless otherwise expressly specified, the drawings are not drawn to scale.
FIG. 1 is a three-dimensional schematic diagram of an electrochemical device according to an embodiment of this application;
FIG. 2 is a cross-sectional view of sectioning along a line A-A shown in FIG. 1 according to an embodiment of this application;
FIG. 3 is a cross-sectional view of sectioning along a line B-B shown in FIG. 1 according to an embodiment of this application;
FIG. 4 is a cross-sectional view of sectioning along a line C-C shown in FIG. 1 according to an embodiment of this application;
FIG. 5 is a close-up view of a part D1 shown in FIG. 2 according to an embodiment of this application;
FIG. 6 is another cross-sectional view of sectioning along a line B-B shown in FIG. 1 according to an embodiment of this application;
FIG. 7 is another cross-sectional view of sectioning along a line A-A shown in FIG. 1 according to an embodiment of this application;
FIG. 8 is a close-up view of a part D2 shown in FIG. 7 according to an embodiment of this application;
FIG. 9 is another cross-sectional view of sectioning along a line C-C shown in FIG. 1 according to an embodiment of this application;
FIG. 10 is still another cross-sectional view of sectioning along a line A-A shown in FIG. 1 according to an embodiment of this application;
FIG. 11 is yet another cross-sectional view of sectioning along a line A-A shown in FIG. 1 according to an embodiment of this application;
FIG. 12 is a close-up view of a part D3 shown in FIG. 11 according to an embodiment of this application;
FIG. 13 is a close-up view of a part D4 shown in FIG. 11 according to an embodiment of this application;
FIG. 14 is another cross-sectional view of sectioning along a line B-B shown in FIG. 1 according to an embodiment of this application;
FIG. 15 is still another cross-sectional view of sectioning along a line B-B shown in FIG. 1 according to an embodiment of this application;
FIG. 16 is yet another cross-sectional view of sectioning along a line A-A shown in FIG. 1 according to an embodiment of this application; and
FIG. 17 is a next cross-sectional view of sectioning along a line A-A shown in FIG. 1 according to an embodiment of this application.

### DETAILED DESCRIPTION

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. Understandably, the specific embodiments described herein are merely intended to explain this application, but not to limit this application. All other embodiments derived by a person of ordinary skill in the art based on the embodiments of this application without making any creative efforts fall within the protection scope of this application.

It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

In addition, to the extent that no mutual conflict occurs, the technical features described below in different embodiments of this application may be combined with each other.

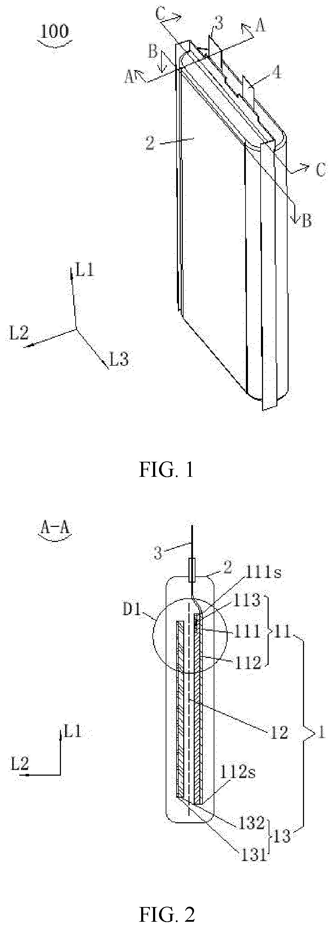

Referring to FIG. 1 and FIG. 2, FIG. 1 is a three-dimensional schematic diagram of an electrochemical device according to an embodiment of this application. FIG. 2 is a cross-sectional view of sectioning along a line A-A shown in FIG. 1 according to an embodiment of this application. The electrochemical device 100 includes an electrode assembly 1. The electrode assembly 1 is a charge and discharge element in the electrochemical device 100.

In some embodiments, the electrochemical device 100 further includes a packaging shell 2, a first tab 3, and a second tab 4. The electrode assembly 1 is accommodated in the packaging shell 2. The first tab 3 and the second tab 4 are connected to the electrode assembly 1 separately. The first tab 3 and the second tab 4 protrude from the packaging shell 2 separately to supply power to an external electronic device and, when the energy of the electrode assembly 1 is insufficient, charge the electrode assembly 1.

For the electrode assembly 1, referring to FIG. 2, FIG. 2 shows a partial structure of the electrode assembly 1. The electrode assembly 1 includes a first electrode plate 11, a first separator 12, and a second electrode plate 13. The first electrode plate 11, the first separator 12, and the second electrode plate 13 are stacked in sequence. The first electrode plate 11, the first separator 12, and the second electrode plate 13 are stacked in sequence along a second direction L2. The second direction L2 is a thickness direction of the electrochemical device 100.

In some embodiments, when the first electrode plate 11, the first separator 12, and the second electrode plate 13 are just stacked in sequence but not wound, the electrode assembly 1 assumes a stacked structure, as shown in FIG. 2. In this case, the electrode assembly 1 in the electrochemical device 100 in FIG. 1 assumes a stacked structure.

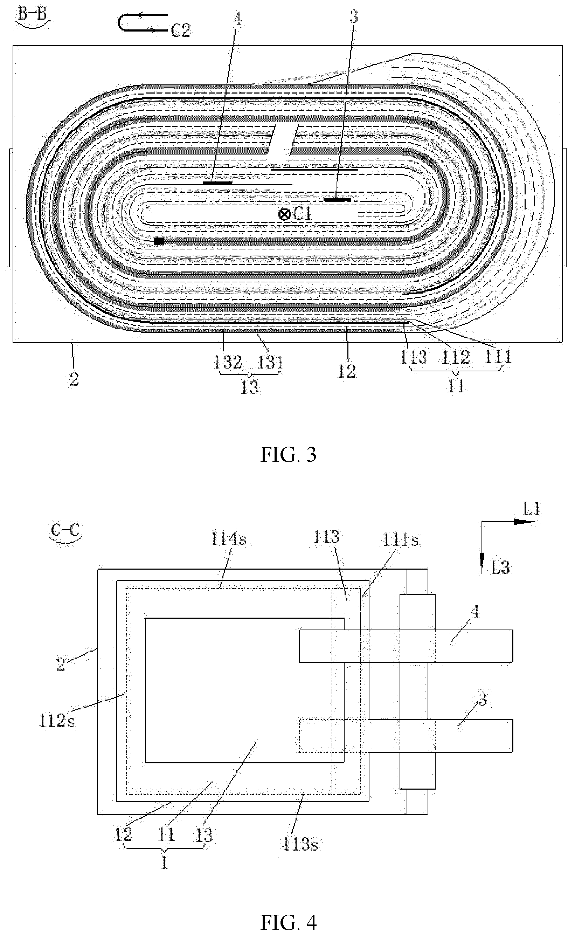

In some embodiments, when the first electrode plate 11, the first separator 12, and the second electrode plate 13 are stacked in sequence and then wound, the electrode assembly 1 forms a winding structure, as shown in FIG. 3. FIG. 3 is a cross-sectional view of sectioning along line B-B shown in FIG. 1 according to an embodiment of this application. In this case, the electrode assembly 1 in the electrochemical device 100 in FIG. 1 assumes a winding structure.

Regarding the first electrode plate 11, the following structure and functions of the first electrode plate 11 are applicable regardless of whether the electrode assembly 1 assumes a stacked structure or a winding structure. Referring to FIG. 4, FIG. 4 is a cross-sectional view of sectioning along a line C-C shown in FIG. 1 according to an embodiment of this application. Along the first direction L1, the first electrode plate 11 includes a first end portion 111s and a second end portion 112s. The first direction L1 is the extension direction of the first tab 3 or the second tab 4. The first direction L1 is perpendicular to the second direction L2. In some embodiments, the first direction L1 may be the length direction of the electrochemical device 100. The first tab 3 is connected to the first end portion 111s, and the first tab 3 extends beyond the first end portion 111s along the first direction L1. Alternatively, the first tab 3 is connected to the second end portion 112s, and the first tab 3 extends beyond the second end portion 112s along the first direction L1. The first end portion 111s and the second end portion 112s are two opposite end portions of the first electrode plate 11 along a direction in which the first tab 3 extends beyond the first current collector 111. In other words, the first end portion 111s and the second end portion 112s are two opposite end portions of the first electrode plate 11 along the first direction L1.

Referring to FIG. 2 or FIG. 3, the first electrode plate 11 includes a first current collector 111, a first active material layer 112, and a first insulation layer 113.

The first active material layer 112 is stacked on a surface of the first current collector 111, the surface being oriented toward the first separator 12.

Referring to FIG. 4, the first current collector 111 is connected to the first tab 3 of the electrochemical device 100. In some embodiments, the first tab 3 is connected to the first current collector 111, and the first tab 3 extends beyond the first current collector 111 along the first direction L1 to facilitate connection between the electrochemical device 100 and an external circuit. Through the connection between the first tab 3 and the first current collector 111, the first current collector 111 is electrically connected to the external circuit. In some embodiments, the first tab 3 may be connected to the first current collector 111 by welding or conductive adhesive. In some embodiments, the first tab 3 and the first current collector 111 may be formed in one piece. In other words, the first tab 3 is formed by extending out a part of the first current collector 111.

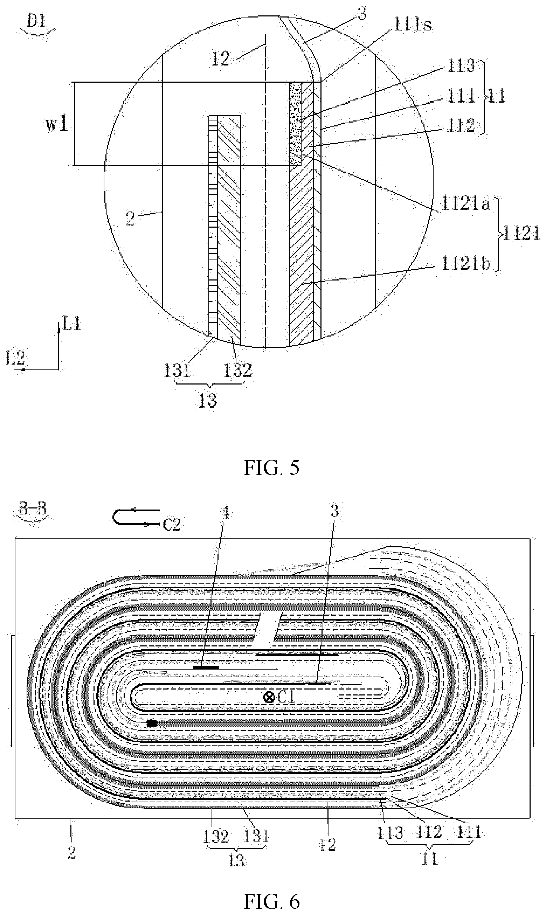

Referring to FIG. 2 or FIG. 3, the first insulation layer 113 is stacked on a first surface 1121 of the first active material layer 112, the first surface being oriented toward the first separator 12. The first insulation layer 113 is located at the first end portion Ills. Referring to FIG. 5, FIG. 5 is a close-up view of a part D1 shown in FIG. 2 according to an embodiment of this application. Along the first direction L1, a width w1 of the first insulation layer 113 satisfies: 2 mm ≤ w1 ≤ 10 mm. In some embodiments, along the first direction L1, the width w1 of the first insulation layer 113 satisfies: 3 mm ≤ w1 ≤ 5 mm. By disposing the first insulation layer 113 at the first end portion 111s of the first electrode plate 11 and defining the width of the first insulation layer 113 to be not less than 2 mm, the first insulation layer 113 serves as a spacer between the first electrode plate 11 and the second electrode plate 13 when the first separator 12 shrinks at the first end portion 111s, thereby reducing the risk of contact and short circuit between the first electrode plate 11 and the second electrode plate 13. In addition, by defining the width of the first insulation layer 113 to be not greater than 10 mm, this application reduces the impact on the interface performance of the first electrode plate 11 caused by the placement of the first insulation layer 113, and therefore, reduces the impact on the lithium ion migration between the first electrode plate 11 and the second electrode plate 13 caused by the placement of the first insulation layer 113, thereby achieving superior overall performance of the electrochemical device 100.

It is hereby noted that in the first direction L1, the first insulation layer 113 extends toward the second end portion 112s from an edge of the first electrode plate 11, the edge being away from the second end portion 112s. The amount by which the first insulation layer 113 extends toward the second end portion 112s from the edge of the first electrode plate 11 is the width w1 of the first insulation layer 113, the edge being away from the second end portion 112s.

In some embodiments, along the first direction L1, an edge, away from the second end portion 112s, of the first current collector 111 is flush with an edge, away from the second end portion 112s, of the first active material layer 112. Alternatively, an edge, away from the second end portion 112s, of the first current collector 111 exceeds an edge, away from the second end portion 112s, of the first active material layer 112 by an amount not greater than 1 mm. Because the width w1 of the first insulation layer 113 is not less than 2 mm, the first insulation layer 113 is at least partially located on the first active material layer 112. To be specific, along the first direction L1, when an edge, away from the second end portion 112s, of the first current collector 111 is flush with an edge, away from the second end portion 112s, of the first active material layer 112, the first insulation layer 113 is fully located on the first active material layer 112. Along the first direction L1, when an edge, away from the second end portion 112s, of the first current collector 111 exceeds an edge, away from the second end portion 112s, of the first active material layer 112 by an amount not greater than 1 mm, a part of the first insulation layer 113 is located on the first active material layer 112, and another part of the first insulation layer 113 is located on the exposed first current collector 111. By defining the width of the first insulation layer 113 to be not less than 2 mm, along the first direction L1, regardless of whether an edge, away from the second end portion 112s, of the first current collector 111 exceeds an edge, away from the second end portion 112s, of the first active material layer 112, the first insulation layer 113 can reduce the risk of contact and short circuit between the first active material layer 112 and the second electrode plate 13, thereby reducing the risk of contact and short circuit between the first electrode plate 11 and the second electrode plate 13.

It is hereby noted that the structure and functions of the second end portion 112s may be learned by referring to the description about the first end portion 111s, the details of which are omitted here.

In some embodiments, the first insulation layer 113 includes an inorganic material. In some embodiments, the inorganic material includes a ceramic material. In some embodiments, the ceramic material includes one or more selected from the group consisting of titanium dioxide, aluminum oxide, boehmite, zirconium oxide, lithium fluoride, silicon oxide, calcium oxide, magnesium oxide, tantalum oxide, silicon nitride, cubic boron nitride, aluminum nitride, chromium nitride, titanium nitride, silicon carbide, boron carbide, titanium carbide, and chromium carbide.

It is hereby noted that the above definitions on the first insulation layer 113 are applicable to both a stacked-type electrode assembly 1 and a winding electrode assembly 1.

When the electrode assembly 1 assumes a stacked structure, in some embodiments, referring to FIG. 4, along a third direction L3, the first insulation layer 113 extends from a third end portion 113s of the first electrode plate 11 to a fourth end portion 114s. The third direction L3 is perpendicular to the first direction L1, and the third direction L3 is perpendicular to the second direction L2. In some embodiments, the third direction L3 is referred to as a width direction of the electrochemical device 100. The third end portion 113s and the fourth end portion 114s are two end portions of the first electrode plate 11, the two end portions being opposite to each other along the third direction L3. In a case that the first electrode plate 11 is rectangular when the first electrode plate 11 is viewed along the second direction L2, the first end portion 111s, the third end portion 113s, the second end portion 112s, and the fourth end portion 114s are connected in sequence; or, the first end portion Ills, the fourth end portion 114s, the second end portion 112s, and the third end portion 113s are connected in sequence.

When the electrode assembly 1 assumes a winding structure, in some embodiments, referring to FIG. 3, along a direction opposite to a winding direction C2, the first insulation layer 113 extends from a winding tail end of the first electrode plate 11 toward a winding start end of the first electrode plate 11. The first insulation layer 113 is disposed around a side of the outermost coil of the first electrode plate 11, the side being oriented back from a winding axis C1. In some embodiments, the winding start end of the first electrode plate 11 is located at the winding start end of the winding electrode assembly 1, and the winding tail end of the first electrode plate 11 is located at the winding tail end of the winding electrode assembly 1.

In some other embodiments, referring to FIG. 6, FIG. 6 is another cross-sectional view of sectioning along line B-B shown in FIG. 1 according to an embodiment of this application. In this case, the electrode assembly 1 in the electrochemical device 100 in FIG. 1 assumes a jwinding structure. Along the direction opposite to the winding direction C2, the first insulation layer 113 extends from the winding tail end of the first electrode plate 11 to the winding start end of the first electrode plate 11. It is hereby noted that, in some embodiments, the first tab 3 is disposed at the winding start end of the first electrode plate 11. Along the direction opposite to the winding direction C2, the first insulation layer 113 extends to the first tab 3 from the winding tail end of the first electrode plate 11.

It is hereby noted that the electrode assembly 1 assumes a winding structure. In some embodiments, an outermost coil of the first electrode plate 11 is closer to the winding axis C1 than an outermost coil of the second electrode plate 13. When the electrochemical device 100 is impacted due to dropping to the ground or for other reasons, the outermost coil of the first separator 12 shrinks severely at the first end portion 111s or the second end portion 112s. The first insulation layer 113 is located at the first end portion Ills. The first insulation layer 113 extends from a winding tail end of the first electrode plate 11 toward a winding start end of the first electrode plate 11. The first insulation layer 113 is disposed around the outermost coil of the first electrode plate 11. Therefore, the first insulation layer 113 serves as a spacer between the first electrode plate 11 and the second electrode plate 13, thereby reducing the risk of a short circuit between the first electrode plate 11 and the second electrode plate 13 caused by the shrinkage of the first separator 12. The outermost coil of the first separator 12 is the farthest coil of the first separator 12 from the winding axis C1 in the winding structure.

In this application, a coil means a circle from a specified point on a winding cell, referred to as a start end, to another point, referred to as a termination end, along the winding direction. The termination end, the start end, and the center of the coil are on the same straight line. The start end is located between the termination end and the center of the coil. A semi-coil is a half of the circle.

In some embodiments, referring to FIG. 5, the first surface 1121, oriented toward the first separator 12, of the first active material layer 112 includes a first region 1121a and a second region 1121b. The first region 1121a is located at the first end portion 111s. The first insulation layer 113 is stacked on the first region 1121a. A surface of the first insulation layer 113 is flush with the second region 1121b, the surface being oriented back from the first region 1121a. Therefore, the interface, close to the first separator 12, of the first electrode plate 11 is flat and even, thereby facilitating lithium ion migration between the first electrode plate 11 and the second electrode plate 12.

It is hereby noted that, in some embodiments, the first region 1121a is formed by recessing the first surface 1121 toward the first current collector 111.

It is hereby noted that, in some embodiments, the preparation method of the first electrode plate 11 includes: applying the first active material onto the first current collector 111 to form a first active material layer 112, and then stacking the first insulation layer 113 onto the first region 1121a, and then pressing the resulting product through rollers to form a first electrode plate 11 with a flat and even interface.

Understandably, the term "flush" herein means that the surface, oriented back from the first region 1121a, of the first insulation layer 113, and the surface of the second region 1121b together form a relatively flat and even interface. In other words, the status of being "flush" is reflected by a relatively uniform thickness of the material layer disposed on the first current collector 111 in both the part overlaid with the first insulation layer 113 and the part not overlaid with the first insulation layer 113.

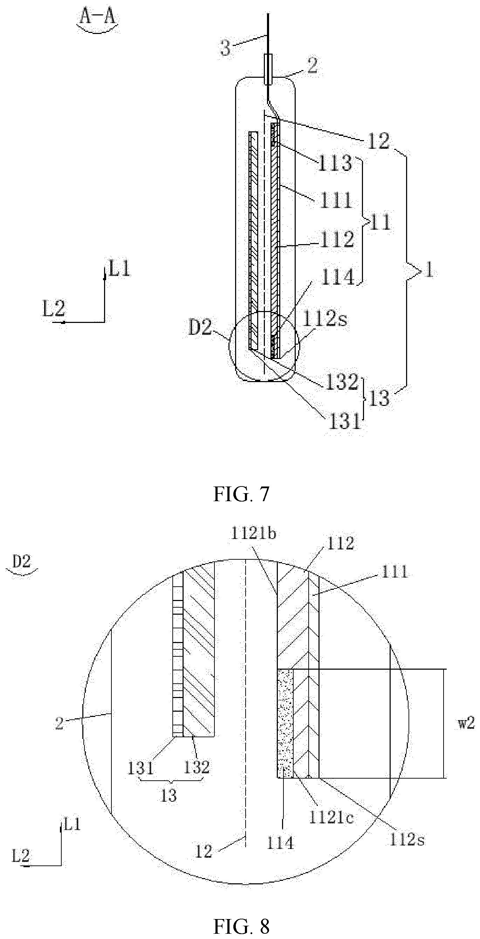

In some embodiments, referring to FIG. 7 and FIG. 8, FIG. 7 is another cross-sectional view of sectioning along a line A-A shown in FIG. 1 according to an embodiment of this application, and FIG. 8 is a close-up view of a part D2 shown in FIG. 7 according to an embodiment of this application. The first electrode plate 11 further includes a second insulation layer 114 in addition to the first current collector 111, the first active material layer 112, and the first insulation layer 113. The second insulation layer 114 is disposed at the second end portion 112s of the first electrode plate 11. The second insulation layer 114 is stacked on the first surface 1121. The second insulation layer 114 is located at the second end portion 112s. Along the first direction L1, the width w2 of the second insulation layer 114 satisfies: 2 mm ≤ w2 ≤ 10 mm. In some embodiments, along the first direction L1, the width w2 of the second insulation layer 114 satisfies: 3 mm ≤ w2 ≤ 5 mm. By disposing the second insulation layer 114 at the second end portion 112s of the first electrode plate 11 and defining the width of the second insulation layer 114 to be not less than 2 mm, the second insulation layer 114 serves as a spacer between the first electrode plate 11 and the second electrode plate 13 when the first separator 12 shrinks at the second end portion 112s, thereby reducing the risk of contact and short circuit between the first electrode plate 11 and the second electrode plate 13. In addition, by defining the width of the second insulation layer 114 to be not greater than 10 mm, this application reduces the impact on the interface performance of the first electrode plate 11 caused by the placement of the second insulation layer 114, and therefore, reduces the impact on the lithium ion migration between the first electrode plate 11 and the second electrode plate 13 caused by the placement of the second insulation layer 114, thereby achieving superior overall performance of the electrochemical device 100.

It is hereby noted that the above definitions on the second insulation layer 114 are applicable to both a stacked-type electrode assembly 1 and a winding electrode assembly 1.

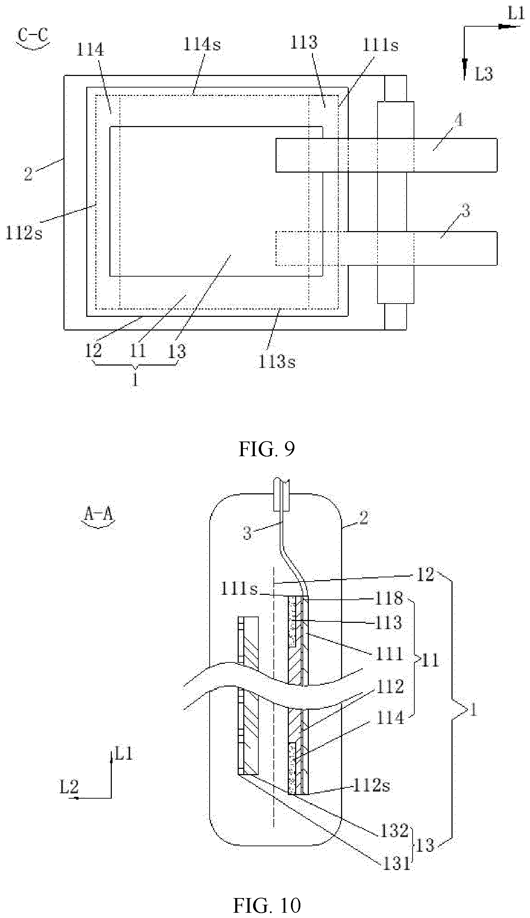

When the electrode assembly 1 assumes a stacked structure, referring to FIG. 9, FIG. 9 is another cross-sectional view of sectioning along a line C-C shown in FIG. 1 according to an embodiment of this application. In some embodiments, along a third direction L3, the second insulation layer 114 extends from a third end portion 113s of the first electrode plate 11 to a fourth end portion 114s.

When the electrode assembly 1 assumes a winding structure, in some embodiments, along a direction opposite to a winding direction C2, the second insulation layer 114 extends from a winding tail end of the first electrode plate 11 toward a winding start end of the first electrode plate 11. The second insulation layer 114 is disposed around a side of the outermost coil of the first electrode plate 11, the side being oriented back from a winding axis C1.

In some other embodiments, along the direction opposite to the winding direction C2, the second insulation layer 114 extends from the winding tail end of the first electrode plate 11 to the winding start end of the first electrode plate 11. It is hereby noted that, in some embodiments, the first tab 3 is disposed at the winding start end of the first electrode plate 11. Along the direction opposite to the winding direction C2, the second insulation layer 114 extends to the first tab 3 from the winding tail end of the first electrode plate 11.

The second insulation layer 114 may have the same material and functions as the first insulation layer 113, the details of which are omitted here. By disposing the first insulation layer 113 at the first end portion Ills and disposing the second insulation layer 114 at the second end portion 112s, the first insulation layer 113 and the second insulation layer 114 serve as spacers between the first electrode plate 11 and the second electrode plate 13 when the first separator 12 shrinks, thereby reducing the risk of contact and short circuit between the first electrode plate 11 and the second electrode plate 13.

In some embodiments, referring to FIG. 10, FIG. 10 is still another cross-sectional view of sectioning along a line A-A shown in FIG. 1 according to an embodiment of this application. A first layer 118 is further sandwiched between the first current collector 111 and the first active material layer 112 of the first electrode plate 11. The first layer 118 includes a binder and a conductive agent. The first layer 118 bonds the first current collector 111 and the first active material layer 112, thereby reducing the risk that the first active material layer 112 is detached from the first current collector 111, and reducing the risk that the first insulation layer 113 and second insulation layer 114 disposed on the first active material layer 112 are detached together with the first active material layer 112 from the first current collector 111 simultaneously. Therefore, when the first separator 12 shrinks, the first insulation layer 113 and/or the second insulation layer 114 serves as a spacer between the first electrode plate 11 and the second electrode plate 13.

In some embodiments, the binder includes a polymer. In some embodiments, the polymer includes one or more selected from the group consisting of polyethylene oxide, polypropylene oxide, polydimethylsiloxane, polymethyl methacrylate, polyvinyl chloride, polyvinylidene difluoride, polyethyleneimine, polyphenylene terephthalamide, polymethoxypolyethylene glycol methacrylate, poly2-methoxyethyl glycidyl ether, polyvinylidene fluoride, poly(vinylidene fluoride-co-hexafluoropropylene), polyacrylonitrile, polyethylene carbonate, polytrimethylene carbonate, and polypropylene carbonate.

In some embodiments, the conductive agent includes one or more selected from the group consisting of conductive carbon black, conductive graphite, acetylene black, Ketjen black, porous carbon, graphene, conductive carbon fibers, and carbon nanotubes.

It is hereby noted that in some embodiments, the first electrode plate 11 is a negative electrode. When the electrochemical device 100 is being charged or discharged, the first active material layer 112 is configured to be delithiated or lithiated. When the first active material layer 112 is lithiated, the thickness of the first active material layer 112 increases along the first direction L1. When the first active material layer 112 is delithiated, the thickness of the first active material layer 112 decreases. During delithiation or lithiation of the first active material layer 112, the first active material layer 112 is prone to be detached from the first current collector 111. With the first layer 118 disposed, the first layer 118 bonds the first active material layer 112 and the first current collector 111, thereby reducing the risk that the first active material layer 112 is detached from the first current collector 111 during delithiation or lithiation of the first active material layer 112. Therefore, the disposed first layer 118 ensures that the first insulation layer 113 and/or the second insulation layer 114 plays an effective role of spacer between the first electrode plate 11 and the second electrode plate 13.

In some embodiments, referring to FIG. 5 and FIG. 8, the first surface 1121, oriented toward the first separator 12, of the first active material layer 112 further includes a third region 1121c in addition to the first region 1121a and the second region 1121b. The third region 1121c is located at the second end portion 112s. The second insulation layer 114 is stacked on the third region 1121c. A surface of the second insulation layer 114 is flush with the second region 1121b, the surface being oriented back from the third region 1121c. Therefore, the interface, close to the first separator 12, of the first electrode plate 11 is flat and even, thereby facilitating lithium ion migration between the first electrode plate 11 and the second electrode plate 12.

It is hereby noted that, the third region 1121c is formed by recessing the first surface 1121 toward the first current collector 111.

It is hereby noted that, in some embodiments, the preparation method of the first electrode plate 11 includes: applying the first active material onto the first current collector 111 to form a first active material layer 112, and then stacking the first insulation layer 113 onto the first region 1121a and stacking the second insulation layer 114 onto the third region 1121c, and then pressing the resulting product through rollers to form a first electrode plate 11 with a flat and even interface.

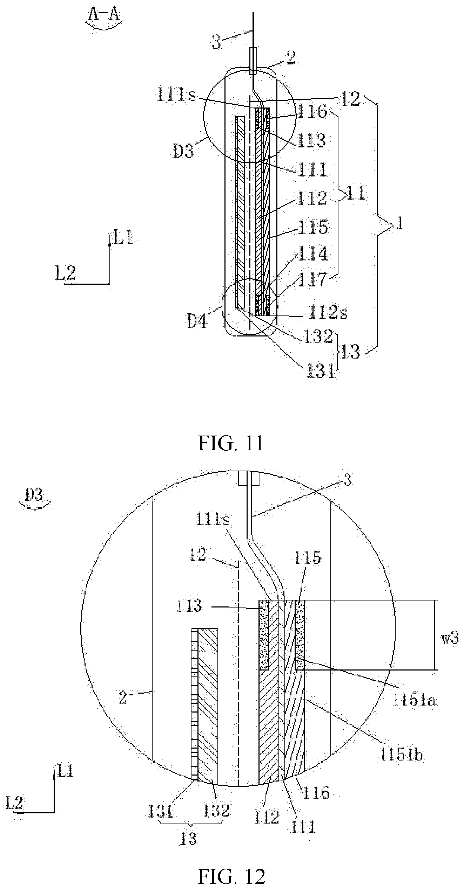

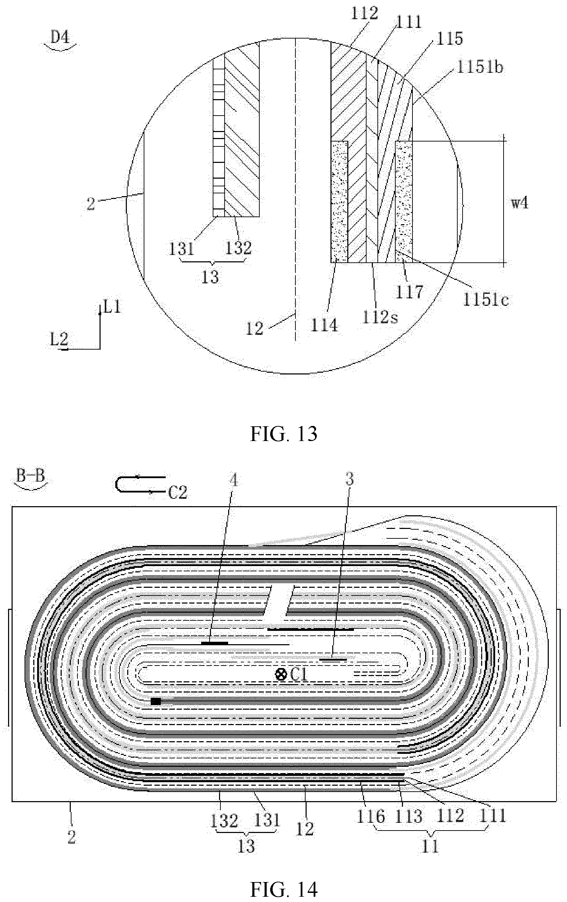

In some embodiments, referring to FIG. 11 to FIG. 13, FIG. 11 is yet another cross-sectional view of sectioning along a line A-A shown in FIG. 1 according to an embodiment of this application; FIG. 12 is a close-up view of a part D3 shown in FIG. 11 according to an embodiment of this application; and FIG. 13 is a close-up view of a part D4 shown in FIG. 11 according to an embodiment of this application. The first electrode plate 11 further includes a second active material layer 115 in addition to the first current collector 111, the first active material layer 112, and the first insulation layer 113. The second active material layer 115 is stacked on a surface of the first current collector 111, the surface being oriented back from the first separator 12. In other words, the first active material layer 112 and the second active material layer 115 are disposed on two opposite surfaces of the first current collector 111 respectively.

Referring to FIG. 11 to FIG. 13, the first electrode plate 11 further includes a third insulation layer 116 and/or a fourth insulation layer 117. The third insulation layer 116 and the fourth insulation layer 117 are both stacked on a second surface 1151 of the second active material layer 115, the second surface being oriented back from the first separator 12. The third insulation layer 116 is located at the first end portion 111s. The fourth insulation layer 117 is located at the second end portion 112s. In other words, along the first direction L1, the third insulation layer 116 and the first insulation layer 113 are disposed opposite to each other at the first end portion 111s, and the fourth insulation layer 117 and the second insulation layer 114 are disposed opposite to each other at the second end portion 112s. Along the first direction L1, a width w3 of the third insulation layer 116 satisfies: 2 mm ≤ w3 ≤ 10 mm. In some embodiments, the width w3 of the third insulation layer 116 satisfies: 3 mm ≤ w3 ≤ 5 mm. Along the first direction L1, a width w4 of the fourth insulation layer 117 satisfies: 2 mm ≤ w4 ≤ 10 mm. In some embodiments, the width w4 of the fourth insulation layer 117 satisfies: 3 mm ≤ w4 ≤ 5 mm.

It is hereby noted that the above definitions on the third insulation layer 116 or the fourth insulation layer 117 are applicable to both a stacked-type electrode assembly 1 and a winding electrode assembly 1.

When the electrode assembly 1 assumes a stacked structure, in some embodiments, along a third direction L3, the third insulation layer 116 may extend from a third end portion 113s of the first electrode plate 11 to a fourth end portion 114s, and the fourth insulation layer 117 may extend from the third end portion 113s of the first electrode plate 11 to the fourth end portion 114s.

When the electrode assembly 1 assumes a winding structure, in some embodiments, referring to FIG. 14, FIG. 14 is yet another cross-sectional view of sectioning along a line B-B shown in FIG. 1 according to an embodiment of this application. Along the direction opposite to the winding direction C2, the third insulation layer 116 extends from a winding tail end of the first electrode plate 11 toward a winding start end of the first electrode plate 11. The third insulation layer 116 is disposed around a side of the outermost coil of the first electrode plate 11, the side being oriented back from the winding axis C1.

Understandably, along the direction opposite to the winding direction C2, the fourth insulation layer 117 may also extend from the winding tail end of the first electrode plate 11 toward the winding start end of the first electrode plate 11. The fourth insulation layer 117 is disposed around a side of the outermost coil of the first electrode plate 11, the side being oriented back from the winding axis C1.

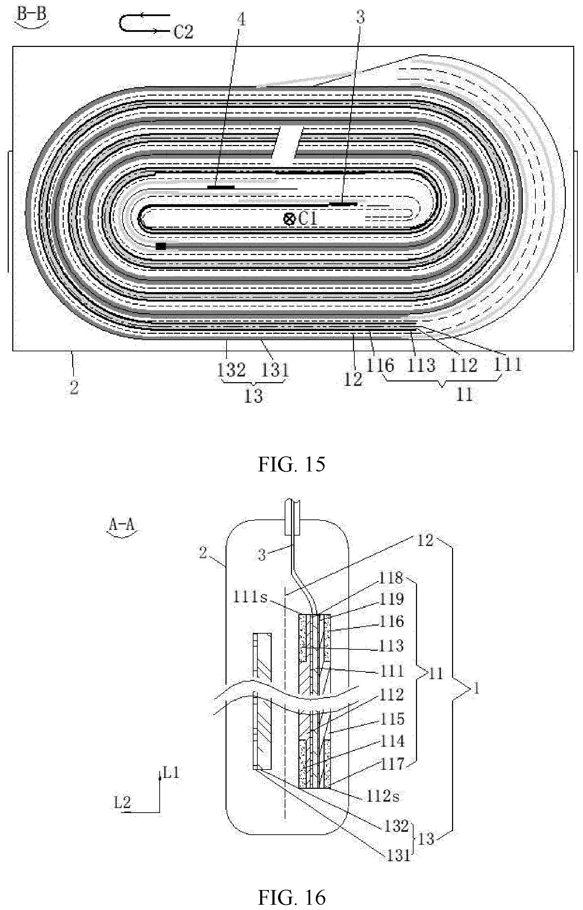

In some other embodiments, referring to FIG. 15, FIG. 15 is still another cross-sectional view of sectioning along a line B-B shown in FIG. 1 according to an embodiment of this application. Along the direction opposite to the winding direction C2, the third insulation layer 116 extends from the winding tail end of the first electrode plate 11 to the winding start end of the first electrode plate 11. It is hereby noted that, in some embodiments, the first tab 3 is disposed at the winding start end of the first electrode plate 11. Along the direction opposite to the winding direction C2, the third insulation layer 116 extends to the first tab 3 from the winding tail end of the first electrode plate 11.

Understandably, along the direction opposite to the winding direction C2, the fourth insulation layer 117 extends from the winding tail end of the first electrode plate 11 to the winding start end of the first electrode plate 11.

When the electrode assembly 1 assumes a winding structure, by disposing the third insulation layer 116 at the first end portion 111s and disposing the fourth insulation layer 117 at the second end portion 112s, the third insulation layer 116 and the fourth insulation layer 117 serve as spacers between the outermost coil of the first electrode plate 11 and the second outermost coil of the second electrode plate 13 when the second outermost coil of the first separator 12 shrinks, thereby reducing the risk of contact and short circuit between the first electrode plate 11 and the second electrode plate 13, and reducing the risk of an internal short circuit of the electrode assembly 1. The second outermost coil of the first separator 12 is connected to the outermost coil of the first separator 12. The second outermost coil of the first electrode plate 11 is connected to the outermost coil of the first electrode plate 11.

It is hereby noted that the third insulation layer 116 and/or the fourth insulation layer 117 may have the same material and functions as the first insulation layer 113, the details of which are omitted here.

In some embodiments, referring to FIG. 12 and FIG. 13, a second surface 1151, oriented back from the first separator 12, of the second active material layer 115 includes a first region 1151a, a second region 1151b, and a third region 1151c. The first region 1151a is located at the first end portion Ills, and the third region 1151c is located at the second end portion 112s. The third insulation layer 116 is stacked on the first region 1151a. The fourth insulation layer 117 is stacked on the third region 1151c. A surface, oriented back from the first region 1151a, of the third insulation layer 116, is flush with the second region 1151b, and/or a surface, oriented back from the third region 1151c, of the fourth insulation layer 117, is flush with the second region 1151b, so that the interface, oriented back from the first separator 12, of the first electrode plate 11, is flat and even.

It is hereby noted that the first region 1151a is formed by recessing the second surface 1151 toward the first current collector 111, and the third region 1151c is formed by recessing the second surface 1151 toward the first current collector 111.

It is hereby noted that, in some embodiments, the preparation method of the first electrode plate 11 includes: applying the first active material onto the two opposite sides of the first current collector 111 to form a first active material layer 112 and a second active material layer 115 respectively, and then stacking the first insulation layer 113 onto the first region 1121a, stacking the second insulation layer 114 onto the third region 1121c, stacking the third insulation layer 116 onto the first region 1151a, stacking the fourth insulation layer 117 onto the third region 1151c, and then pressing the resulting product through rollers to form a first electrode plate 11 with a flat and even interface.

In some embodiments, referring to FIG. 16, FIG. 16 is yet another cross-sectional view of sectioning along a line A-A shown in FIG. 1 according to an embodiment of this application. A second layer 119 is further sandwiched between the first current collector 111 and the second active material layer 115 of the first electrode plate 11. The second layer 119 includes a binder and a conductive agent. The second layer 119 bonds the first current collector 111 and the second active material layer 115, thereby reducing the risk that the second active material layer 115 is detached from the first current collector 111, and reducing the risk that the third insulation layer 116 and fourth insulation layer 117 disposed on the second active material layer 115 are detached together with the second active material layer 115 from the first current collector 111 simultaneously. The second layer 119 may have the same material, structure, and functions as the first layer 118, the details of which are omitted here.

With respect to the second electrode plate 13, referring to FIG. 2, the polarity of the second electrode plate 13 is opposite to the polarity of the first electrode plate 11. For example, when the first electrode plate 11 is a negative electrode, the second electrode plate 13 is a positive electrode; or, when the first electrode plate 11 is a positive electrode, the second electrode plate 13 is a negative electrode. The second electrode plate 13 may have the same structure and function as the first electrode plate 11. For example, the second electrode plate 13 includes a second current collector 131, a third active material layer 132, and a fourth active material layer (not shown in the drawing). The third active material layer 132 and the fourth active material layer are disposed on two opposite surfaces of the second electrode plate 13 respectively; or, the second electrode plate 13 includes a second current collector 131 and a third active material layer 132; or, the second electrode plate 13 includes a second current collector 131. The structure of the first electrode plate 11 and the structure of the second electrode plate 13 may form any combination. For example, the first electrode plate 11 includes a first current collector 111, a first active material layer 112, and a second active material layer 115; and the second electrode plate 13 includes a second current collector 131 and a third active material layer 132. For example, the first electrode plate 11 includes a first current collector 111 and a first active material layer 112, and the second electrode plate 13 includes a second current collector 131 and a third active material layer 132. The specific structure and functions of the second electrode plate 13 may be learned by referring to the description about the first electrode plate 11, the details of which are omitted here.

With respect to the first electrode plate 11 and the second electrode plate 13, the second electrode plate 13 and the first electrode plate 11 may have the same structure and functions, but the polarity of the second electrode plate 13 is opposite to the polarity of the first electrode plate 11, and the material of the second electrode plate 13 is different from the material of the first electrode plate 11. In some embodiments, the first current collector 111 of the first electrode plate 11 includes copper foil. The first active material layer 112 and the second active material layer 115 of the first electrode plate 11 include graphite. In some embodiments, the second current collector 131 of the second electrode plate 13 includes aluminum foil, and the third active material layer 132 and the fourth active material layer of the second electrode plate 13 include lithium cobalt oxide.

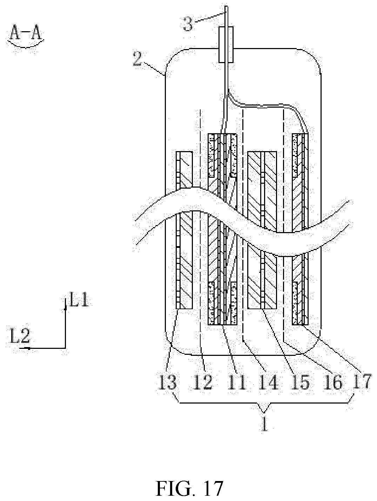

In some embodiments, referring to FIG. 17, FIG. 17 is a next cross-sectional view of sectioning along a line A-A shown in FIG. 1 according to an embodiment of this application. The electrode assembly 1 further includes a second separator 14, a third electrode plate 15, a third separator 16, and a fourth electrode plate 17 that are stacked in sequence along the second direction L2. The second separator 14 is stacked on the first electrode plate 11. The second separator 14 serves as a spacer between the first electrode plate 11 and the third electrode plate 15. The polarity of the third electrode plate 15 is the same as the polarity of the second electrode plate 13, and the polarity of the fourth electrode plate 17 is the same as the polarity of the first electrode plate 11. The third electrode plate 15 and the second electrode plate 13 may assume the same structure, and the third electrode plate 15 and the second electrode plate 13 may be made of the same material. The fourth electrode plate 17 and the first electrode plate 11 may assume the same structure, and the fourth electrode plate 17 and the first electrode plate 11 may be made of the same material.

When the third insulation layer 116 is disposed at the first end portion 111s of the first electrode plate 11 and the fourth insulation layer 117 is disposed at the second end portion 112s, the third insulation layer 116 and the fourth insulation layer 117 serve as spacers between the first electrode plate 11 and the third electrode plate 15 when the second separator 14 shrinks, thereby reducing the risk of contact and short circuit between the first electrode plate 11 and the third electrode plate 15, and reducing the risk of an internal short circuit of the electrode assembly 1.

It is hereby noted that, when the electrode assembly 1 further includes a second separator 14, a third electrode plate 15, a third separator 16, and a fourth electrode plate 17, in some embodiments, along the first direction L1, the second electrode plate 13 is closer to the packaging shell 2 of the electrochemical device 111 than the first electrode plate 11. When the electrochemical device 100 is damaged due to dropping to the ground or for other reasons, the first separator 12 shrinks severely at the first end portion 111s or the second end portion 112s. The first insulation layer 1 is located at the first end portion 111s. The first insulation layer 1 serves as a spacer between the first electrode plate 11 and the second electrode plate 13, thereby reducing the risk of a short circuit between the first electrode plate 11 and the second electrode plate 13 caused by the shrinkage of the first separator 12.

It is hereby noted that, in a case that the electrode assembly 1 further includes a second separator 14, a third electrode plate 15, a third separator 16, and a fourth electrode plate 17, when the third insulation layer 116 and/or the fourth insulation layer 117 is disposed and the interface, oriented back from the first separator 12, of the first electrode plate 11 is flat and even, the migration of lithium ions is facilitated between the first electrode plate 11 and the third electrode plate 15.

It is hereby noted that, referring to FIG. 2, when the second electrode plate 13 is disposed close to the packaging shell 2, the second electrode plate 13 includes a second current collector 131 and a third active material layer 132. The third active material layer 132 is stacked on a surface, oriented toward the first separator 12, of the second current collector 131, and no fourth active material layer needs to be disposed on a surface, oriented toward the packaging shell 2, of the second current collector 131. Referring to FIG. 17, when the fourth electrode plate 17 abuts the packaging shell 2, the side, oriented back from the third separator 16, of the fourth electrode plate 17 does not need to be coated with an active material layer.

Understandably, the second separator 14 is configured to separate the first electrode plate 11 from the third electrode plate 15, and the first separator 12 is configured to separate the first electrode plate 11 from the second electrode plate 13. Therefore, the first electrode plate 11 includes the first current collector 111, the first active material layer 112, and the second active material layer 115. The second electrode plate 13 includes the second current collector 131 and the third active material layer 132. The third active material layer 132 is stacked on a surface of the second current collector 131, the surface being oriented toward the first separator 12.

It is hereby noted that, in some embodiments, the numbers of the second separators 14, the third electrode plates 15, the third separators 16, and the fourth electrode plates 17 are plural. The plurality of second separators 14, third electrode plates 15, third separators 16, and fourth electrode plates 17 are stacked along a direction opposite to the second direction L2, thereby improving the capabilities of charging and discharging the electrochemical device 100 through an external circuit.

It is hereby noted that the second separator 14 and the third separator 16 may have the same material and structure as the first separator 12.

To facilitate readers to understand the inventive concept of this application, 8 electrochemical devices provided in this application are enumerated below as embodiments, that is, Embodiment 1, Embodiment 2, Embodiment 3, Embodiment 4, Embodiment 5, Embodiment 6, Embodiment 7, and Embodiment 8 for reference. 2 electrochemical devices provided in the prior art are enumerated below as Comparative Embodiment 1 and Comparative Embodiment 2. Performance tests are performed on the embodiments and comparative embodiments. The relevant parameters and performance test results of the embodiments and comparative embodiments are shown in Table 1 below.

The same structure in Embodiments 1 to 8 and Comparative Embodiments 1 and 2 is an electrochemical device that includes an electrode assembly. The electrode assembly assumes a winding structure. The dimensions of each of the electrochemical devices along the first direction, the second direction, and the third direction are 90 mm, 4.8 mm, and 66 mm, respectively.

The difference in structure in Embodiments 1 to 8 and Comparative Embodiments 1 and 2 is: the first electrode plate of the electrode assembly in Embodiments 1 to 8 and Comparative Embodiment 2 further includes a first insulation layer and a second insulation layer. Along the first direction, that is, along the length direction of the electrochemical device, the width w1 of the first insulation layer is equal to the width w2 of the second insulation layer. Along the direction opposite to the winding direction, the first insulation layer extends from the winding tail end of the first electrode plate toward the winding start end of the first electrode plate. The first insulation layer is disposed around a side of the outermost coil of the first electrode plate, the side being oriented back from the winding axis. The second insulation layer extends from the winding tail end of the first electrode plate toward the winding start end of the first electrode plate. The second insulation layer is disposed around the side of the outermost coil of the first electrode plate, the side being oriented back from the winding axis.

The difference in structure in Embodiments 1 to 8 and Comparative Embodiment 2 is: In Embodiments 1 to 8, along the first direction, that is, along the length direction of the electrochemical device, the value of the width w1 of the first insulation layer is: 2 mm ≤ w1 ≤ 10 mm, and the value of the width w2 of the second insulation layer is: 2 mm ≤ w2 ≤ 10 mm; and in Comparative Embodiment 2, along the first direction, that is, along the length direction of the electrochemical device, the width w1 of the first insulation layer is 12 mm, and the width w2 of the second insulation layer is 12 mm.

A drop test is performed on the electrochemical devices prepared in Embodiments 1 to 8 and Comparative Embodiments 1 and 2. A process of the drop test includes: Dropping an electrochemical device freely to the surface of a steel plate from a height of 1.8 meters for 6 times in 1 round until 3 rounds are completed; in each round, letting two surfaces of the electrochemical device along the thickness direction of the electrochemical device fall downward to the steel plate separately, and letting 4 corners of the electrochemical device fall downward to the steel plate separately. The drop test is performed on 10 electrochemical devices of each embodiment or Comparative Embodiment 1 or Comparative Embodiment 2 separately. After completion of the drop test, the percentage of failed test-pieces with severe voltage drop in the electrochemical devices prepared in Embodiments 1 to 8 or Comparative Embodiment 1 or Comparative Embodiment 2 is counted. After completion of the drop test, the interface performance of the first electrode plate in the electrochemical device is detected. For example, phenomena such as purple specks and lithium plating are inspected, or, for example, the number of short circuit points of the first electrode plate is counted, so as to evaluate the interface performance of the electrochemical device. The test results are recorded in Table 1.

**Table 1**

| | Width w1 of first insulation layer or width w2 of second insulation layer (mm) | Percentage of failure with severe voltage drop (number of failed test-pieces/total number of test-pieces) | Interface performance |
|---|---|---|---|
| Comparative Embodiment 1 | None | 10/10 | Not impaired |
| Embodiment 1 | 1 | 8/10 | Not impaired |
| Embodiment 2 | 2 | 3/10 | Not impaired |
| Embodiment 3 | 3 | 0/10 | Not impaired |
| Embodiment 4 | 4 | 0/10 | Not impaired |
| Embodiment 5 | 5 | 0/10 | Not impaired |
| Embodiment 6 | 7 | 0/10 | Not impaired |
| Embodiment 7 | 8 | 0/10 | Not impaired |
| Embodiment 8 | 10 | 0/10 | Slightly impaired |
| Comparative Embodiment 2 | 12 | 0/10 | Severely deteriorated |

As can be seen from Table 1, in a case that, along the first direction, that is, along the length direction of the electrochemical device, the value of the width w1 of the first insulation layer is: 2 mm ≤ w1 ≤ 10 mm; and, along the first direction, the value of the width w2 of the second insulation layer is: 2 mm ≤ w2 ≤ 10 mm, the percentage of failed test-pieces with severe voltage drop in the electrochemical devices prepared in the embodiments of this application is lower than that in the electrochemical devices prepared in Comparative Embodiment 1 that lacks the first insulation layer or second insulation layer. This indicates that the first insulation layer and the second insulation layer can effectively reduce the percentage of failed electrochemical devices with severe voltage drop, that is, reduce the risk of internal short circuits of the electrode assembly. In a case that, along the first direction, the value of the width w1 of the first insulation layer is: 3 mm ≤ w1 ≤ 10 mm, and, along the first direction, the value of the width w2 of the second insulation layer is: 3 mm ≤ w2 ≤ 10 mm, the percentage of failed test-pieces with severe voltage drop in the electrochemical devices prepared in the embodiments of this application is zero.

As can be seen from Table 1, in a case that, along the first direction, that is, along the length direction of the electrochemical device, the value of the width w1 of the first insulation layer is: 2 mm ≤ w1 ≤ 10 mm, and, along the first direction, the value of the width w2 of the second insulation layer is: 2 mm ≤ w2 ≤ 10 mm, the interface performance of the electrochemical devices prepared in the embodiments of this application is not affected by the placement of the first insulation layer and the second insulation layer in contrast to Comparative Embodiment 1 that lacks the first insulation layer or second insulation layer. Along the first direction, when the value of the width w1 of the first insulation layer is 12 mm and the value of the width w2 of the second insulation layer is 12 mm, the interface performance of the electrochemical device is severely deteriorated, indicating that the width w1 of the first insulation layer being 12 mm and the width w2 of the second insulation layer being 12 mm may impair the adhesiveness between the first electrode plate and the first separator, and in turn, impair the electrical performance of the electrochemical device.

To sum up, in a case that, along the first direction, the value of the width w1 of the first insulation layer is: 2 mm ≤ w1 ≤ 10 mm, and, along the first direction, the value of the width w2 of the second insulation layer is: 2 mm ≤ w2 ≤ 10 mm, the overall performance of the electrochemical devices prepared in the embodiments of this application is good. When the value falls within 3 mm ≤ w1 ≤ 5 mm, the electrochemical devices exhibits good safety performance, electrochemical performance, and energy density.

In an embodiment of this application, the electrochemical device 100 includes an electrode assembly 1. The electrode assembly 1 includes a first electrode plate 11, a first separator 12, and a second electrode plate 13 that are stacked in sequence. The first electrode plate 11 includes a first current collector 111, a first active material layer 112, and a first insulation layer 113. The first active material layer 112 is stacked on one surface of the first current collector 111, the surface being oriented toward the first separator 12. The first insulation layer 113 is stacked on a first surface 1121 of the first active material layer 112, the first surface being oriented toward the first separator 12. Along a first direction L1, the first electrode plate 11 includes a first end portion 111s and a second end portion 112s. The first end portion 111s or the second end portion 112s is connected to a first tab 3. The first insulation layer 113 is located at the first end portion 111s. Along the first direction L1, a width w1 of the first insulation layer 113 satisfies: 2 mm ≤ w1 ≤ 10 mm. By disposing the first insulation layer 113 at the first end portion Ills of the first electrode plate 11 and defining the width of the first insulation layer 113 to be not less than 2 mm, the first insulation layer 113 serves as a spacer between the first electrode plate 11 and the second electrode plate 13 when the first separator 12 shrinks, thereby reducing the risk of contact and short circuit between the first electrode plate 11 and the second electrode plate 13. In addition, by defining the width of the first insulation layer 113 to be not greater than 10 mm, this application reduces the impact on the interface performance of the first electrode plate 11 caused by the placement of the first insulation layer 113, and therefore, reduces the impact on the lithium ion migration between the first electrode plate 11 and the second electrode plate 13 caused by the placement of the first insulation layer 113, thereby achieving superior overall performance of the electrochemical device 100.

An embodiment of this application further provides an electronic device. The electronic device includes a load and the electrochemical device 100. The electrochemical device 100 is connected to the load, and the electrochemical device 100 is configured to supply power to the load.

The electronic device may be an energy storage product, a mobile phone, a tablet, an unmanned aerial vehicle, a single-wheel electric vehicle, an electric vehicle with two or more wheels, an electric cleaning tool, or the like.

For example, for the unmanned aerial vehicle, the electrochemical device 100 is mounted in the unmanned aerial vehicle. The electrochemical device 100 is configured to supply power to the loads such as a flight system, a control system, and a photographing system in the unmanned aerial vehicle.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. An electrochemical device, comprising an electrode assembly, the electrode assembly comprises a first electrode plate, a first separator, and a second electrode plate that are stacked in sequence; the first electrode plate comprises a first current collector and a first active material layer; and the first active material layer is stacked on one surface of the first current collector, **characterized in that**:
the first electrode plate further comprises a first insulation layer, the first insulation layer is stacked on a first surface of the first active material layer, the first surface being oriented back from the first current collector;
along a first direction, the first electrode plate comprises a first end portion and a second end portion, at least one of the first end portion or the second end portion is connected to a first tab, and the first insulation layer is located at the first end portion; and
along the first direction, a width w1 of the first insulation layer satisfies: 2 mm ≤ w1 ≤ 10 mm.

2. The electrochemical device according to claim 1, **characterized in that** the width w1 of the first insulation layer satisfies: 3 mm ≤ w1 ≤ 5 mm.

3. The electrochemical device according to claim 1, **characterized in that** the first surface comprises a first region and a second region, the first region is located at the first end portion, the first insulation layer is stacked on the first region, and a surface of the first insulation layer is flush with the second region, the surface being oriented back from the first region.

4. The electrochemical device according to claim 3, **characterized in that**
the first electrode plate further comprises a second insulation layer, the second insulation layer is stacked on the first surface, and the second insulation layer is located at the second end portion.

5. The electrochemical device according to claim 4, **characterized in that** the first surface further comprises a third region, the third region is located at the second end portion, and a surface of the second insulation layer is flush with the second region, the surface being oriented back from the third region.

6. The electrochemical device according to any one of claims 1 to 5, **characterized in that**:
the first electrode plate further comprises a second active material layer, and the second active material layer is stacked on another surface of the first current collector; and
the first electrode plate further comprises a third insulation layer, the third insulation layer is stacked on a second surface of the second active material layer, the second surface being oriented back from the first current collector, and the third insulation layer being located at the first end portion.

7. The electrochemical device according to claim 6, **characterized in that**
the first electrode plate further comprises a fourth insulation layer, the fourth insulation layer is stacked on the second surface, and the fourth insulation layer is located at the second end portion.

8. The electrochemical device according to any one of claims 1 to 5, **characterized in that** the first electrode plate further comprises a first layer, and the first layer is laid between the first current collector and the first active material layer.

9. The electrochemical device according to claim 8, **characterized in that** the first layer comprises a binder and a conductive agent.

10. The electrochemical device according to any one of claims 1 to 5, **characterized in that**:
the first electrode plate, the first separator, and the second electrode plate are wound together to form a winding structure, and a winding axis of the winding structure is arranged along the first direction;
an outermost coil of the first electrode plate is closer to the winding axis than an outermost coil of the second electrode plate; and
the first insulation layer extends from a winding tail end of the first electrode plate toward a winding start end of the first electrode plate, and the first insulation layer is disposed around a side of the outermost coil of the first electrode plate, the side being oriented back from the winding axis.

11. The electrochemical device according to claim 10, **characterized in that** the first insulation layer extends from the winding tail end of the first electrode plate to the winding start end of the first electrode plate.

12. The electrochemical device according to any one of claims 1 to 5, **characterized in that**:
the electrode assembly further comprises a second separator, a third electrode plate, a third separator, and a fourth electrode plate that are stacked in sequence; the second separator is stacked on the first electrode plate; and the second separator serves as a spacer between the first electrode plate and the third electrode plate.

13. An electronic device, **characterized in that** the electronic device comprises a load and the electrochemical device according to any one of claims 1 to 12, and the electrochemical device is configured to supply power to the load.
